# EUROPÄISCHE PATENTSCHRIFT

(11) **EP 1 029 220 B1**
(45) Veröffentlichungstag und Bekanntmachung des Hinweises auf die Patenterteilung: **18.09.2002**
(21) Anmeldenummer: 97909107.1
(22) Anmeldetag: 04.11.1997
(51) Int. Cl.: G01C 11/02, G01C 9/12, G01S 5/16, G01S 5/18

(54) **VORRICHTUNG ZUR REFERENZIERUNG EINES KOORDINATENSYSTEMS**
DEVICE FOR REFERENCING A SYSTEM OF CO-ORDINATES
DISPOSITIF DE REFERENCEMENT D'UN SYSTEME DE COORDONNEES

(43) Veröffentlichungstag der Anmeldung: 23.08.2000
(73) Patentinhaber: SYNTHES AG CHUR, 7002 Chur (CH)
(72) Erfinder: HOFSTETTER, Robert, CH-3007 Bern (CH)
(74) Vertreter: Lusuardi, Werther Giovanni, Dr.
(86) Internationale Anmeldenummer: CH9700418
(87) Internationale Veröffentlichungsnummer: WO99023452

(56) Entgegenhaltungen:
- WO-A-86/06948
- FR-A- 2 608 271
- US-A- 5 197 476
- US-A- 5 617 857

## Beschreibung

Die Erfindung betrifft eine Vorrichtung zur Referenzierung eines Koordinatensystems gemäss dem Oberbegriff des Patentanspruchs 1.

In vielen Fällen werden ortsveränderliche Messgeräte oder bildgebende Geräte eingesetzt, wobei deren Lage je nach Messung verändert werden muss. Einige dieser Geräte verändern ihr Verhalten je nach Ausrichtung zum Gravitationsfeld der Erde, z.B. aufgrund von Materialdeformationen. Das kann zu Messfehlern bzw. zu fehlerhaften Bildern führen. Zur Korrektur oder Kompensation dieser Fehler ist eine akkurate Messung der Richtung des Gravitationsfeldes der Erde bezüglich der Ausrichtung des Messgerätes notwendig.

Eine Vorrichtung zur Ermittlung des Schwerkraftvektors ist in der FR 2 608 271 THOME offenbart. Diese bekannte Vorrichtung enthält einen an einem Faden horizontal frei beweglichen Bleikörper, welcher sich im Schwerefeld ausrichtet. Am Faden sind in Abständen Kugeln mit markierten Zentren angeordnet, so dass die Ausrichtung der Kugelzentren die Bestimmung des Schwerkraftvektors gestattet. Diese bekannte Vorrichtung ermöglicht jedoch lediglich die Ermittlung eines dreidimensionalen Koordinatensystems, dessen vertikale Achse durch den Schwerkraftvektor definiert ist.

Eine Vorrichtung zur Ermittlung eines raumfesten drei-dimensionalen Koordinatensystems ist in der US 5,197,476 NOWACKI offenbart. Diese bekannte Vorrichtung umfasst einen mit Infrarot-LED (Light Emitting Diodes) versehenen dreidimensionalen Rahmen, zwei Infrarotkameras und einen Computer. Mittels der Infrarotkameras werden die Positionen der Infrarot-LED im Raum detektiert und im Computer gespeichert. Nach Entfernung des Rahmens wird die Position einer manuell frei bewegbaren, ebenfalls mit Infrarot-LED versehenen Ultraschallsonde innerhalb des vorgängig durch den Rahmen definierten Volumens relativ zu den vorgängig gespeicherten Positionen der Infrarot-LED am Rahmen vermessen. Durch diese bekannte Vorrichtung wird also lediglich ein raumfestes drei-dimensionales Koordinatensystem ermittelt, welches keinerlei Bezug zum Schwerkraftvektor aufweist.

Hier will die Erfindung Abhilfe schaffen. Der Erfindung liegt das Problem zugrunde, einen im lokalen Schwerefeld ausgerichteten Vektor zu ermitteln. Dieser Vektor liegt innerhalb eines Raumes, zum Beispiel eines Operationsraumes, mit Gegenständen, welche im Raum und zu einem raumfesten Koordinatensystem ausgerichtet sind. Durch die Integration der erfindungsgemässen Vorrichtung in ein CAS-System (Computer Assisted Surgery-System) lässt sich daher in der medizinischen Robotertechnik oder in der computerassistierten chirurgischen Navigation ein Referenzkoordinatensystem mit einer zur Schwerkraft parallelen Achse zur Vermessung von Gegenständen erstellen.

Mit der erfindungsgemässen Vorrichtung soll ermöglicht werden, dass die gravitationsabhängige Deformation von Körpern im Raum ermittelt werden kann. Dies geschieht durch vorgängige Bestimmung der Deformation des Körpers abhängig von seiner Lage gegenüber dem im lokalen Gravitationsfeld ausgerichteten Vektor.

Die Erfindung löst die gestellte Aufgabe mit einem im Raum aufgehängten, sich im lokalen Schwerefeld ausrichtenden Körper, welcher die Merkmale des Anspruchs 1 aufweist.

Bestimmung der Deformation des Körpers abhängig von seiner Lage gegenüber dem im lokalen Gravitationsfeld ausgerichteten Vektor.

Die Erfindung löst die gestellte Aufgabe mit einem im Raum aufgehängten, sich im lokalen Schwerefeld ausrichtenden Körper, welcher die Merkmale des Anspruchs 1 und des Anspruchs 2 aufweist.

Die erfindungsgemässe Vorrichtung ist so an einem Rahmen befestigt, dass sie frei schwingen und sich aufgrund ihrer Massenverteilung im Schwerefeld ausrichten kann.

Die Lage des zum Schwerefeld ausgerichteten Vektors wird mittels an die Vorrichtung montierter Light Emitting Dioden und einer im Operationsraum befindlichen Sensor- und Auswerteeinheit ermittelt. Anstelle der Light Emitting Dioden können auch andere elektromagnetische Wellen resp. Schallwellen emittierende Sender oder Reflektoren eingesetzt werden. Die Ermittlung der Lage der Raumkoordinaten kann über optische Sensoren oder Schallsensoren (Mikrophone), welche die von den beiden am Körper angebrachten Sendern emittierten resp. reflektierten elektromagnetische Wellen oder Schallwellen empfangen, und eine elektronische Auswerteeinrichtung erfolgen. Falls Schallwellen eingesetzt werden, können auch die Sender irgendwo im Raum und die Empfänger an der erfindungsgemässen Vorrichtung angebracht werden. Ebenso möglich ist die Ermittlung der Lage der zum Schwerefeld ausgerichteten Koordinatenachsen mittels an die Vorrichtung montierter Spulen und anderen ebenfalls im Operationsraum installierten Spulen durch Induktionsmessung und deren Auswertung in der Auswerteeinheit.

Damit ist der Vorteil erzielbar, dass innerhalb eines Raumes, zum Beispiel innerhalb eines Operationsraumes ein Koordinatensystem ermittelt werden kann, dessen eine Achse mit der Richtung des lokalen Schwerefeldes übereinstimmt. Dieses Koordinatensystem kann als Referenzsystem zur Lageermittlung und zur Erfassung von Bewegungen von Gegenständen bei der Medizinischen Robotertechnik, bei der Computer assistierten Chirurgie und Navigation (CAS) sowie bei der bildgeführten Chirurgie (Image guided surgery) und Navigation dienen.

Eine bevorzugte Weiterbildung der erfindungsgemässen Vorrichtung besteht darin, dass die Schwingfähigkeit des im Raum aufgehängten, sich im lokalen Schwerefeld ausrichtenden Körpers gedämpft ist. Als Dämpfungseinrichtungen können mechanische Vorrichtungen, wie Federn oder ein Wasserbad, oder auch elektromagnetische Dämpfungselemente eingesetzt werden. Dies hat den Vorteil, dass Erschütterungen keinen Einfluss auf die Ausrichtung des Körpers haben und dieser nicht zu schwingen beginnt oder ein schnelles Ausschwingen gewährleistet ist.

Eine weitere bevorzugte Ausführungsform der erfindungsgemässen Vorrichtung besteht darin, dass der Körper an einem Rahmen kardanisch aufgehängt ist und sich somit im örtlichen Schwerefeld ausrichten kann. Der Rahmen kann zum Beispiel der Operationstisch, eine Instrumentenablage oder ein anderer Gegenstand im Operationsraum sein. Die kardanische Aufhängung ermöglicht dem Körper die Orientierung im Raum in mindestens zwei Freiheitsgraden, so dass sich der Körper auch bei Lageänderungen des Rahmens immer nach dem Schwerefeld orientieren kann.

Wieder eine andere Ausführungsform der erfindungsgemässen Vorrichtung besteht darin, dass sie mit mindestens zwei raumfesten Kameras und einer Auswerteeinheit ausgerüstet ist und sich damit videogrammetrisch die Lage der Raumkoordinaten des Koordinatensystems durch die Aufnahme der von den beiden am Körper angebrachten Sendern oder Reflektoren abgegebenen elektromagnetischen Wellen ermitteln lässt.

Eine weitere Ausführungsform der erfindungsgemässen Vorrichtung besteht darin, dass sie zusätzlich mit mindestens zwei Kameras und einer Auswerteeinheit ausgerüstet ist und dass die zusätzlichen Kameras zur Aufnahme der von den beiden Sendern oder Reflektoren abgegebenen elektromagnetischen Wellen nicht raumfest angeordnet sind und dass der Gravitationsvektor bezüglich eines anderen im Raum befindlichen Starrkörpers berechnet wird.

Eine weitere Ausführungsform der erfindungsgemässen Vorrichtung besteht darin, dass sie zusätzlich mit mindestens zwei raumfesten Kameras und einer Auswerteeinheit ausgerüstet ist und dass die zusätzlichen Kameras digitale Kameras sind.

Wiederum eine andere Ausführungsform der erfindungsgemässen Vorrichtung besteht darin, dass sie zusätzlich mit mindestens zwei optischen Sensoren ausgerüstet ist und die von den beiden Sendern oder Reflektoren abgegebenen elektromagnetischen Wellen von diesen optischen Sensoren detektiert werden.

Eine andere Ausführungsfonn der erfindungsgemässen Vorrichtung besteht darin, dass sie zusätzlich mit mindestens zwei zu einem Computer Assisted Surgery System (CAS) gehörenden, optischen Sensoren ausgerüstet ist und mit Hilfe der Sensoren und der zum Computer Assisted Surgery System gehörenden Auswerteeinheit die Lage der Raumkoordinaten des Koordinatensystems durch die Aufnahme der von den beiden Sendern oder Reflektoren abgegebenen elektromagnetischen Wellen mittels optischer zu einem Computer Assisted Surgery-System gehörenden Sensoren ermittelt wird.

Eine andere Ausführungsform der erfindungsgemässen Vorrichtung besteht darin, dass zusätzlich mindestens zwei raumfeste akustische Sensoren enthalten sind und die von den beiden Sendern emittierten Schallwellen von diesen akustischen Sensoren detektiert werden.

Wiederum eine andere Ausführungsform der erfindungsgemässen Vorrichtung besteht darin, dass zusätzlich mindestens zwei raumfeste akustische Sender enthalten sind und die von den beiden Sendern emittierten Schallwellen von den an der erfindungsgemässen Vorrichtung angebrachten Empfängern detektiert werden.

Eine weitere Ausführungsform der erfindungsgemässen Vorrichtung besteht darin, dass an dem sich im lokalen Schwerefeld ausrichtenden Körper mindestens zwei im Abstand A angeordnete, akustische Wellen detektierende Mittel angebracht sind und diese Mittel Mikrophone sein können.

Wiederum eine andere Ausführungsform der erfindungsgemässen Vorrichtung besteht darin, dass sie zusätzlich mit mindestens zwei Schallwellen emittierenden Sendern und einer Auswerteeinheit ausgerüstet ist und die von den mindestens zwei Sendern emittierten Schallwellen von den Mikrophonen an der erfindungsgemässen Vorrichtung detektiert werden und sich damit durch die Auswertung von Interferenzeffekten die Lage der Raumkoordinaten des Koordinatensystems ermitteln lässt.

Eine weitere Ausführungsform der erfindungsgemässen Vorrichtung besteht darin, dass sie zusätzlich mit mindestens zwei zu einem Computer Assisted Surgery System (CAS) gehörenden, akustischen Sendern ausgerüstet ist und mit Hilfe der Mikrophone und der zum Computer Assisted Surgery System gehörenden Auswerteeinheit die Lage der Raumkoordinaten des Koordinatensystems durch die Aufnahme der von den mindestens zwei Sendern emittierten Schallwellen durch die Mikrophone ermittelt wird.

Eine andere Ausführungsform der erfindungsgemässen Vorrichtung besteht darin, dass an dem sich im lokalen Schwerefeld ausrichtenden Körper mindestens zwei im Abstand A angeordnete, ein Magnetfeld detektierende Mittel angebracht sind und diese Mittel Spulen sein können.

Wiederum eine weitere Ausführungsform der erfindungsgemässen Vorrichtung besteht darin, dass sie zusätzlich mit mindestens einer ein Magnetfeld aufbauenden Spule und einer Auswerteeinheit ausgerüstet ist und das aufgebaute Magnetfeld von den Spulen an der erfindungsgemässen Vorrichtung detektiert wird und sich damit durch die Auswertung der magnetischen Induktion die Lage der Raumkoordinaten des Koordinatensystems ermitteln lässt.

Wieder eine andere Ausführungsform der erfindungsgemässen Vorrichtung besteht darin, dass sie zusätzlich mit mindestens einer zu einem Computer Assisted Surgery System (CAS) gehörenden, ein Magnetfeld aufbauenden Spule ausgerüstet ist und mit Hilfe der Spulen an der erfindungsgemässen Vorrichtung und der zum Computer Assisted Surgery System gehörenden Auswerteeinheit die Lage der Raumkoordinaten des Koordinatensystems durch die Aufnahme des aufgebauten Magnetfeldes durch die Spulen an der erfindungsgemässen Vorrichtung ermittelt wird.

Der vorteil der erfindungsgemässen Vorrichtung liegt darin, dass durch eine relativ einfache Erweiterung mit einem minimalen apparativen Aufwand ein bestehendes CAS-System mit einem konstanten Referenz-Koordinatensystem ausgerüstet werden kann.

Die Erfindung und Weiterbildungen der Erfindung werden im folgenden anhand der teilweise schematischen Darstellungen mehrerer Ausführungsbeispiele noch näher erläutert.

Es zeigen:
Fig. 1 eine perspektivische Darstellung der Anordnung der erfindungsgemässen Vorrichtung mit einem Rahmen und einem Tisch und den Koordinatensystemen;
Fig. 2 eine perspektivische Darstellung einer Ausführungsform der erfindungsgemässen Vorrichtung;
Fig. 3 eine perspektivische Darstellung einer weiteren Ausführungsform der erfindungsgemässen Vorrichtung; und
Fig. 4 eine perspektivische Darstellung einer weiteren Ausführungsform der erfindungsgemässen Vorrichtung.

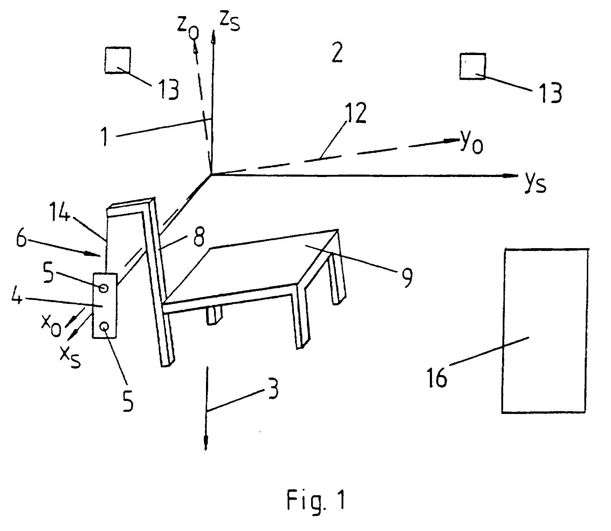

In Fig. 1 ist eine Ausführungsart des zur erfindungsgemässen Vorrichtung gehörenden, sich im Schwerefeld 3 ausrichtenden Körpers 4 zusammen mit einem Rahmen 8 und zwei Lichtwellen ausstrahlenden Sendern 5 dargestellt. Die Aufhängung 6 des Körpers 4 ist bei dieser Ausführungsform durch einen Draht 14 realisiert, welcher an einem Rahmen 8 befestigt ist. Dieser Rahmen 8 ist wiederum mit einem Operationstisch 9 oder anderen sich im Operationsraum befindenden Gegenständen verbunden. Die von den beiden Sendern 5 emittierten Lichtwellen werden von zwei mit einem CAS System 16 verbundenen optischen Sensoren 13 detektiert. Die durch die optischen Sensoren 13 empfangenen Signale lassen sich mittels Interferometrie oder Videogrammetrie in einem Computersystem 16 verarbeiten und als Koordinatensystem 1 im Raum 2 mit einer zur Schwerkraft parallelen Achse darstellen. Dieses Koordinatensystem 1 kann in der medizinischen Robotertechnik oder in der computerassistierten Chirurgie und Navigation als Referenzsystem zur Vermessung dienen und braucht nicht zwangsläufig zu einem am Operationstisch orientierten Koordinatensystem 12 parallele Achsen zu haben.

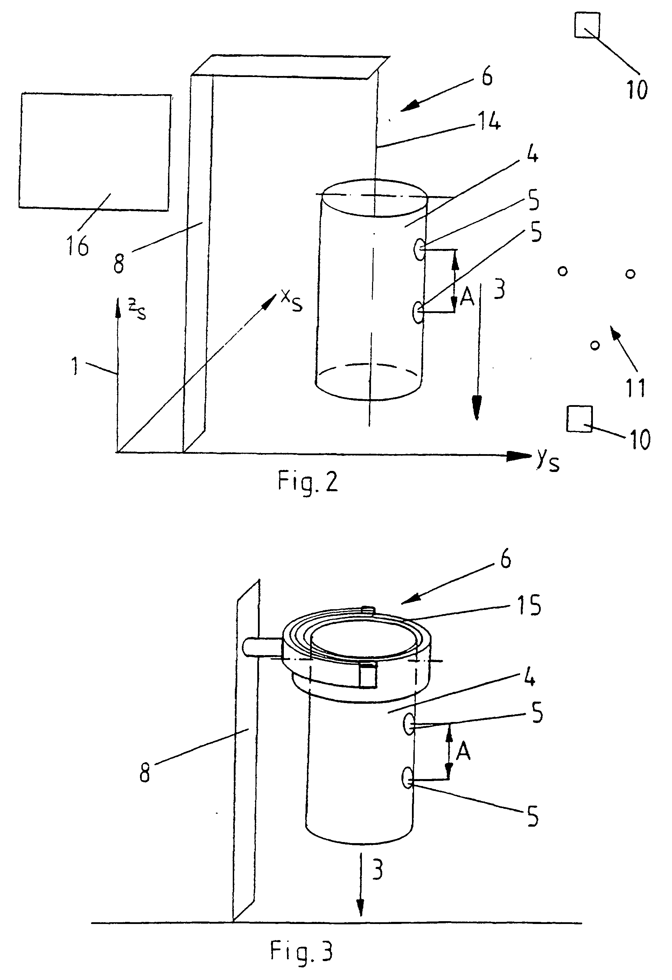

Fig. 2 stellt eine Ausführungsform des erfindungsgemässen Körpers 4 mit den im Abstand A befestigten Lichtquellen 5 dar. Der Körper 4 ist mittels eines Drahtes 14 an einem Rahmen 8 so aufgehängt, dass er sich im lokalen Schwerefeld 3 ausrichten kann. Die von den beiden Sendern 5 emittierten Lichtwellen werden von zwei mit einem CAS System 16 verbundenen Kameras 10 detektiert. Die durch die Kameras 10 empfangenen Signale lassen sich mittels Videogrammetrie in einem Computersystem 16 verarbeiten und als Koordinatensystem 1 im Raum 2 mit einer zur Schwerkraft parallelen Achse darstellen. Dieses Koordinatensystem 1 kann in der medizinischen Robotertechnik oder der computerassistierten Chirurgie und Navigation als Referenzsystem zur Vermessung dienen.

Die in Fig. 3 dargestellte Ausführungsform der erfindungsgemässen Vorrichtung unterscheidet sich von der in Fig. 1 und 2 gezeigten Ausführungsform nur dadurch, dass die Aufhängung 6 so gestaltet ist, dass der Körper 4 mittels einer kardanischen Aufhängung 15 am Rahmen 8 frei schwingbar aufgehängt ist und sich dadurch in Richtung des lokalen Schwerefeldes 3 ausrichten kann.

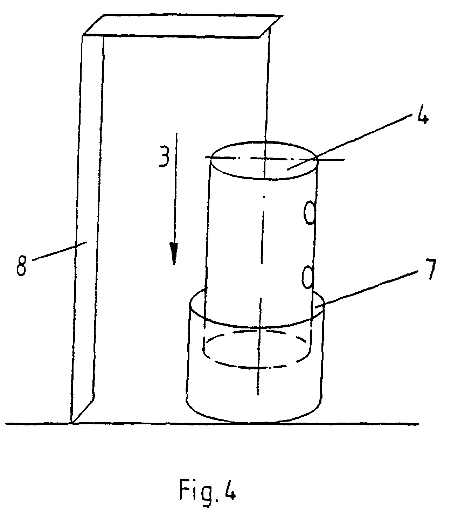

Die in Fig. 4 gezeigte Ausführungsform unterscheidet sich von der in Fig. 1 und 2 dargestellten Ausführungsform der erfindungsgemässen Vorrichtung nur dadurch, dass der Körper 4 teilweise in ein Flüssigkeitsbad 7 eingetaucht ist und damit Schwingungen gedämpft werden können.

## Patentansprüche

1. Vorrichtung zur Referenzierung eines Koordinatensystems (1) im Raume (2), mit einem im Raume (2) aufgehängten, sich im lokalen Schwerefeld (3) ausrichtenden Körper (4),
**dadurch gekennzeichnet, dass**
A) der Körper (4) mindestens zwei im Abstand A angeordnete erste, elektromagnetisch oder akustisch wirksame Mittel (5) umfasst;
B) die Vorrichtung in ein Computer Assisted Surgery System (CAS) integriert ist, welches
C) mindestens zwei zweite, elektromagnetisch oder akustisch wirksame Mittel, welche mit den ersten Mitteln (5) in Wechselwirkung stehen; und
D) eine Auswerteeinheit (16) zur Ermittlung der Raumkoordinaten der ersten Mittel (5) umfasst.

2. Vorrichtung nach Anspruch 1, **dadurch gekennzeichnet, dass** die ersten Mittel (5) elektromagnetische oder akustische Wellen abgebende Sender und die zweiten Mittel optische oder akustische Sensoren (13) sind.

3. Vorrichtung nach Anspruch 1, **dadurch gekennzeichnet, dass** die ersten Mittel (5) akustische Empfänger und die zweiten Mittel akustische Sender sind.

4. Vorrichtung nach einem der Ansprüche 1 bis 3, **dadurch gekennzeichnet, dass** die Aufhängung (6) des Körpers (4) mittels eines dünnen Fadens, eines dünnen Drahtes (14), oder einer Kette (14) realisiert ist.

5. Vorrichtung nach einem der Ansprüche 1 bis 3, **dadurch gekennzeichnet, dass** die Aufhängung (6) des Körpers (4) eine kardanische Aufhängung (15) ist.

6. Vorrichtung nach einem der Ansprüche 1 bis 3, **dadurch gekennzeichnet, dass** die Aufhängung (6) des Körpers (4) mittels eines Kugelgelenkes realisiert ist.

7. Vorrichtung nach einem der Ansprüche 1 bis 3, **dadurch gekennzeichnet, dass** die Aufhängung (6) des Körpers (4) im Raum durch Einlagerung des Körpers (4) in ein Elastomer gestaltet ist.

8. Vorrichtung nach Anspruch 7, **dadurch gekennzeichnet, dass** das Elastomer ein Silikonkautschuk ist.

9. Vorrichtung nach Anspruch 8, **dadurch gekennzeichnet, dass** der Körper (4) in einen geschäumten Silikonkautschuk eingelagert ist.

10. Vorrichtung nach einem der Ansprüche 1 bis 9, **dadurch gekennzeichnet, dass** die Ausrichtung des Körpers (4) im Schwerefeld (3) gedämpft ist.

11. Vorrichtung nach Anspruch 10, **dadurch gekennzeichnet, dass** die Ausrichtung des Körpers (4) im Schwerefeld (3) durch ein den Körper (4) umgebendes Flüssigkeitsbad (7) gedämpft ist.

12. Vorrichtung nach Anspruch 10, **dadurch gekennzeichnet, dass** die Ausrichtung des Körpers (4) im Schwerefeld (3) durch Federn gedämpft ist.

13. Vorrichtung nach Anspruch 10, **dadurch gekennzeichnet, dass** die Ausrichtung des Körpers (4) im Schwerefeld (3) elektromagnetisch gedämpft ist.

14. Vorrichtung nach Anspruch 10, **dadurch gekennzeichnet, dass** die Ausrichtung des Körpers (4) im Schwerefeld (3) durch Reibung mechanisch gedämpft ist.

15. Vorrichtung nach Anspruch 10, **dadurch gekennzeichnet, dass** die Ausrichtung des Körpers (4) im Schwerefeld (3) durch Luft- oder Gasdruckstossdämpfer gedämpft ist.

16. Vorrichtung nach Anspruch 2, **dadurch gekennzeichnet, dass** die Mittel (5) optische Leuchtquellen sind.

17. Vorrichtung nach Anspruch 2, **dadurch gekennzeichnet, dass** die Mittel (5) Light Emitting Dioden (LED) sind.

18. Vorrichtung nach Anspruch 2, **dadurch gekennzeichnet, dass** die Mittel (5) infrarot Light Emitting Dioden sind.

19. Vorrichtung nach Anspruch 1, **dadurch gekennzeichnet, dass** die Mittel (5) optische Reflektoren sind.

20. Vorrichtung nach Anspruch 2, **dadurch gekennzeichnet, dass** die Mittel (5) akustische Sender sind.

21. Vorrichtung nach Anspruch 3, **dadurch gekennzeichnet, dass** die akustische Wellen detektierenden Mittel (5) Mikrophone sind.

22. Vorrichtung nach Anspruch 2, **dadurch gekennzeichnet, dass** sie zusätzlich mit mindestens zwei optischen Sensoren (13) und einer Auswerteeinheit (16) ausgerüstet ist und die von den mindestens zwei Mitteln (5) abgegebenen elektromagnetischen Wellen von diesen optischen Sensoren (13) detektiert werden und sich damit durch die Auswertung von Interferenzeffekten die Lage der Raumkoordinaten des Koordinatensystems (1) ermitteln lässt.

23. Vorrichtung nach Anspruch 2, **dadurch gekennzeichnet, dass** sie zusätzlich mit mindestens zwei raumfesten Kameras (10) und einer Auswerteeinheit (16) ausgerüstet ist und die von den mindestens zwei Mitteln (5) abgegebenen elektromagnetischen Wellen von diesen Kameras (10) detektiert werden und sich damit videogrammetrisch die Lage der Raumkoordinaten des Koordinatensystems (1) ermitteln lässt.

24. Vorrichtung nach Anspruch 2, **dadurch gekennzeichnet, dass** sie zusätzlich mit mindestens zwei Kameras (10) und einer Auswerteeinheit (16) ausgerüstet ist und dass die zusätzlichen Kameras (10) zur Aufnahme der von den mindestens zwei Mitteln (5) abgegebenen elektromagnetischen Wellen nicht raumfest angeordnet sind und dass die Lage der Kameras (10) durch Aufnahme und Auswertung eines raumfesten Passpunktfeldes (11) ermittelt wird.

25. Vorrichtung nach Anspruch 2, **dadurch gekennzeichnet, dass** sie zusätzlich mit mindestens zwei raumfesten Kameras (10) und einer Auswerteeinheit (16) ausgerüstet ist und dass die zusätzlichen Kameras (10) digitale Kameras sind.

26. Vorrichtung nach Anspruch 2, **dadurch gekennzeichnet, dass** sie zusätzlich mit mindestens zwei akustischen Sensoren und einer Auswerteeinheit (16) ausgerüstet ist und die von den mindestens zwei Mitteln (5) emittierten Schallwellen von diesen akustischen Sensoren detektiert werden und sich damit durch die Auswertung von Interferenzeffekten die Lage der Raumkoordinaten des Koordinatensystems (1) ermitteln lässt.

27. Vorrichtung nach Anspruch 2, **dadurch gekennzeichnet, dass** sie zusätzlich mit mindestens zwei zu einem Computer Assisted Surgery System (CAS) gehörenden, optischen Sensoren (13) ausgerüstet ist und mit Hilfe der Sensoren (13) und der zum Computer Assisted Surgery System gehörenden Auswerteeinheit (16) die Lage der Raumkoordinaten des Koordinatensystems (1) durch die Aufnahme der von den mindestens zwei Mitteln (5) emittierten elektromagnetischen Wellen ermittelt wird.

28. Vorrichtung nach Anspruch 19, **dadurch gekennzeichnet, dass** sie zusätzlich mit mindestens zwei Kameras (10), mindestens einem elektromagnetische Wellen abgebenden Sender und einer Auswerteeinheit (16) ausgerüstet ist und die von den mindestens zwei Mitteln (5) reflektierten elektromagnetischen Wellen von diesen Kameras (10) detektiert werden und sich damit die Lage der Raumkoordinaten des Koordinatensystems (1) ermitteln lässt.

29. Vorrichtung nach Anspruch 3, **dadurch gekennzeichnet, dass** sie zusätzlich mit mindestens zwei Schallwellen emittierenden Sendern und einer Auswerteeinheit (16) ausgerüstet ist und die von den mindestens zwei Sendern emittierten Schallwellen von den Mikrophonen, die an der erfindungsgemässen Vorrichtung angebracht sind, detektiert werden und sich damit durch die Auswertung von Interferenzeffekten die Lage der Raumkoordinaten des Koordinatensystems (1) ermitteln lässt.

30. Vorrichtung nach Anspruch 3, **dadurch gekennzeichnet, dass** sie zusätzlich mit mindestens zwei zu einem Computer Assisted Surgery System (CAS) gehörenden, akustischen Sendern ausgerüstet ist und mit Hilfe der am Körper (4) angebrachten Mikrophone und der zum Computer Assisted Surgery System gehörenden Auswerteeinheit (16) die Lage der Raumkoordinaten des Koordinatensystems (1) durch die Aufnahme der von den mindestens zwei Sendern emittierten Schallwellen durch die Mikrophone ermittelt wird.

31. Vorrichtung nach Anspruch 1, **dadurch gekennzeichnet, dass** die das Magnetfeld detektierenden Mittel (5) Spulen sind.

32. Vorrichtung nach Anspruch 1, **dadurch gekennzeichnet, dass** die das Magnetfeld detektierenden Mittel (5) Hall-Sensoren sind.

33. Vorrichtung nach Anspruch 31, **dadurch gekennzeichnet, dass** sie zusätzlich mit mindestens einer ein Magnetfeld aufbauenden Spule und einer Auswerteeinheit (16) ausgerüstet ist und das aufgebaute Magnetfeld von den Spulen an der erfindungsgemässen Vorrichtung detektiert wird und sich damit durch die Auswertung der magnetischen Induktion die Lage der Raumkoordinaten des Koordinatensystems (1) ermitteln lässt.

34. Vorrichtung nach Anspruch 32, **dadurch gekennzeichnet, dass** sie zusätzlich mit mindestens einer ein Magnetfeld aufbauenden Spule und einer Auswerteeinheit (16) ausgerüstet ist und das aufgebaute Magnetfeld von den Hall-Sensoren an der erfindungsgemässen Vorrichtung detektiert wird und sich damit durch die Auswertung des Hall-Effektes die Lage der Raumkoordinaten des Koordinatensystems (1) ermitteln lässt.

35. Vorrichtung nach Anspruch 31, **dadurch gekennzeichnet, dass** sie zusätzlich mit mindestens einer zu einem Computer Assisted Surgery System (CAS) gehörenden, ein Magnetfeld aufbauenden Spule ausgerüstet ist und mit Hilfe der Spulen an der erfindungsgemässen Vorrichtung und der zum Computer Assisted Surgery System gehörenden Auswerteeinheit (16) die Lage der Raumkoordinaten des Koordinatensystems (1) durch die Aufnahme des Magnetfeldes durch die mindestens 2 Spulen ermittelt wird.

36. Vorrichtung nach Anspruch 32, **dadurch gekennzeichnet, dass** sie zusätzlich mit mindestens einer zu einem Computer Assisted Surgery System (CAS) gehörenden, ein Magnetfeld aufbauenden Spule ausgerüstet ist und mit Hilfe der Hall-Sensoren an dererfin dungsgemässen Vorrichtung und der zum Computer AssistedSurgery System gehörenden Auswerteeinheit (16) die Lage der Raumkoordinaten des Koordinatensystems (1) durch die Aufnahme des Magnetfeldes durch die mindestens 2 Hall-Sensoren ermittelt wird.

## Claims

1. Device for referencing a system of coordinates (1) in space (2), using a body (4) suspended in space (2) and aligning in a local gravitational field,
**characterised in that**
A) the body (4) comprises a first set of at least two means (5) that are electromagnetically or acoustically active and that have been placed at a distance A from each other;
B) the device is incorporated in a Computer Assisted Surgery System (CAS), that comprises
C) a second set of at least two means that are electromagnetically or acoustically active and which interact with the first set of means (5); and
D) a plotting unit (16) for determining the spatial coordinates of the first set of means (5).

2. Device according to claim 1, **characterised in that** the first set of means (5) includes transmitters that emit electromagnetic or acoustic waves, and the second set of means includes optical or acoustical sensors (13).

3. Device according to claim 1, **characterised in that** the first set of means (5) includes acoustical receivers, and the second set of means includes acoustical transmitters.

4. Device according to one of the claims 1 to 3, **characterised in that** the suspension (6) of the body (4) is realised by a thin thread, a thin wire (14) or a chain (14).

5. Device according to one of the claims 1 to 3, **characterised in that** the suspension (6) of the body (4) is realised by means of gimbals (15).

6. Device according to one of the claims 1 to 3, **characterised in that** the suspension (6) of the body (4) is realised by means of a ball-and-socket-joint.

7. Device according to one of the claims 1 to 3, **characterised in that** the suspension of the body (4) is realised through embedding the body (4) in an elastomer.

8. Device according to claim 7, **characterised in that** the elastomer is a silicon rubber.

9. Device according to claim 8, **characterised in that** the body (4) is embedded in a foamed silicon rubber.

10. Device according to one of the claims 1 to 9, **characterised in that** the alignment of the body (4) in the gravitational field (3) is damped.

11. Device according to claim 10, **characterised in that** the alignment of the body (4) in the gravitational field (3) is damped by a liquid bath that surrounds the body (4).

12. Device according to claim 10, **characterised in that** the alignment of the body (4) in the gravitational field (3) is damped by springs.

13. Device according to claim 10, **characterised in that** the alignment of the body (4) in the gravitational field (3) is electromagnetically damped.

14. Device according to claim 10, **characterised in that** the alignment of the body (4) in the gravitational field (3) is mechanically damped through friction.

15. Device according to claim 10, **characterised in that** the alignment of the body (4) in the gravitational field (3) is damped by pneumatic or gas shock absorbers.

16. Device according to claim 2, **characterised in that** the first set of means (5) includes optical emitters.

17. Device according to claim 2, **characterised in that** the first set of means (5) includes Light Emitting Diodes (LED).

18. Device according to claim 2, **characterised in that** the first set of means (5) includes Infrared Light Emitting Diodes.

19. Device according to claim 1, **characterised in that** the first set of means (5) includes optical reflectors.

20. Device according to claim 2, **characterised in that** the first set of means (5) includes acoustical emitters.

21. Device according to claim 3, **characterised in that** the means (5) sensing acoustic waves include microphones.

22. Device according to claim 2, **characterised in that** it additionally comprises at least two optical sensors (13) and a plotting unit (16) and that the electromagnetic waves emitted through the at least two means (5) are detected by said optical sensors (13) to aid determining the position of space coordinates of the system of coordinates (1) through analysis of interference effects.

23. Device according to claim 2, **characterised in that** it additionally comprises at least two stabilized cameras (10) and a plotting unit (16) and that the electromagnetic waves emitted through the at least two means (5) are detected by said cameras (10) for videographically determining the position of space coordinates of the system of coordinates (1).

24. Device according to claim 2, **characterised in that** it additionally comprises at least two cameras (10) and a plotting unit (16) and that the additional cameras (16) for the electromagnetic waves emitted through the at least two means (5) are not stabilized and that the position of the cameras (10) is determined by recording and analysing a stable control point field (11).

25. Device according to claim 2, **characterised in that** it additionally comprises at least two stabilised cameras (10) and a plotting unit (16) and that the cameras (10) are digital cameras.

26. Device according to claim 2, **characterised in that** it additionally comprises at least two acoustical sensors and a plotting unit (16) and that the acoustic waves emitted by the first set of means (5) are detected through these acoustical sensors to aid determining the position of the space coordinates of the system of coordinates (1) through analysis of interference effects.

27. Device according to claim 2, **characterised in that** it comprises at least two optical sensors (13) being part of a Computer Assisted Surgery System (GAS) and that by means of the sensors (13) and the plotting unit (16) being part of the Computer Assisted Surgery System the position of the space coordinates of the system of coordinates (1) may be determined through sensing the electromagnetic waves emitted by the first set of means (5).

28. Device according to claim 19, **characterised in that** it additionally comprises at least two cameras (10), at least one emitter emitting electromagnetic waves and a plotting unit (16) and that the electromagnetic waves reflected through the first set of means (5) are detected by the cameras (10) to aid determining the position of space coordinates of the system of coordinates (1).

29. Device according to claim 3, **characterised in that** it additionally comprises at least two sound wave emitters and a plotting unit (16) and that the sound waves emitted by these at least two sound wave emitters are detected through the microphones attached at the device according to the invention to aid determining the position of the space coordinates of the system of coordinates (1) by means of analysing interference effects.

30. Device according to claim 3, **characterised in that** it comprises at least two sound wave emitters being part of the Computer Assisted Surgery System (CAS) and that by means of the microphones attached to the body (4) and the plotting unit (16) being part of the Computer Assisted Surgery System the position of the space coordinates of the system of coordinates (1) may be determined through detecting the sound waves emitted by the at least two sound wave emitters by means of the microphones.

31. Device according to claim 1, **characterised in that** the means (5) detecting the magnetic field include coils.

32. Device according to claim 1, **characterised in that** the means (5) detecting the magnetic field include Hall-effect components.

33. Device according to claim 31, **characterised in that** it additionally comprises at least one coil used to set up a magnetic field and a plotting unit (16) and that the magnetic field is detected through the coils attached at the device according to the invention to aid determining the position of the space coordinates of the system of coordinates through analysis of magnetic induction.

34. Device according to claim 32, **characterised in that** it additionally comprises at least one coil used to set up a magnetic field and a plotting unit (16) and that the magnetic field is detected through the Hall-effect components attached at the device according to the invention to aid determining the position of the space coordinates of the system of coordinates through analysis of Hall-effects.

35. Device according to claim 31, **characterised in that** it additionally comprises at least one coil used to set up a magnetic field and being part of a Computer Assisted Surgery System (CAS) and that the coils attached at the device according to the invention aid determining the position of the space coordinates of the system of coordinates (1) through detection of the magnetic field by the at least two coils.

36. Device according to claim 32, **characterised in that** it additionally comprises at least one coil used to set up a magnetic field and being part of a Computer Assisted Surgery System (CAS) and that the Hall-effect components attached at the device according to the invention aid determining the position of the space coordinates of the system of coordinates (1) through detection of the magnetic field by the at least two Hall-effect components.

## Revendications

1. Dispositif de référencement d'un système de coordonnées (1) dans un local (2), avec un corps suspendu dans le local (2) et s'alignant sur le champ de gravité local (3),
**caractérisé en ce que**
A) le corps (4) comprend au moins deux premiers moyens électromagnétiquement ou acoustiquement actifs (5) disposés à distance A ;
B) le dispositif est intégré dans un système de chirurgie assistée par ordinateur ("Computer Assisted Surgery" - CAS)
C) qui comprend au moins deux deuxièmes moyens électromagnétiquement ou acoustiquement actifs qui interagissent avec les. premiers moyens (5); et
D) une unité d'évaluation (16) pour la détermination des coordonnées spatiales des premiers moyens (5).

2. Dispositif selon la revendication 1, **caractérisé en ce que** les premiers moyens (5) sont des émetteurs émettant des ondes électromagnétiques ou acoustiques et les deuxièmes moyens sont des capteurs optiques ou acoustiques (13).

3. Dispositif selon la revendication 1, **caractérisé en ce que** les premiers moyens (5) sont des récepteurs acoustiques et les deuxièmes moyens des récepteurs acoustiques.

4. Dispositif selon l'une des revendications 1 à 3, **caractérisé en ce que** la suspension (6) du corps (4) est réalisée au moyen d'un fil mince, d'un câble mince (14) ou d'une chaîne (14).

5. Dispositif selon l'une des revendications 1 à 3, **caractérisé en ce que** la suspension (6) du corps (4) est une suspension (15) à cardans.

6. Dispositif selon l'une des revendications 1 à 3, **caractérisé en ce que** la suspension (6) du corps (4) est réalisée au moyen d'une articulation sphérique.

7. Dispositif selon l'une des revendications 1 à 3, **caractérisé en ce que** la suspension (6) du corps (4) dans l'espace est réalisée par incorporation du corps (4) dans un élastomère.

8. Dispositif selon la revendication 7, **caractérisé en ce que** l'élastomère est un caoutchouc silicone.

9. Dispositif selon la revendication 8, **caractérisé en ce que** le corps (4) est incorporé dans un caoutchouc silicone mousseux.

10. Dispositif selon l'une des revendications 1 à 9, **caractérisé en ce que** l'alignement du corps (4) sur le champ de gravité (3) est amorti.

11. Dispositif selon la revendication 10, **caractérisé en ce que** l'alignement du corps (4) sur le champ de gravité (3) est amorti par un bain de liquide (7) entourant le corps (4).

12. Dispositif selon la revendication 10, **caractérisé en ce que** l'alignement du corps (4) sur le champ de gravité (3) est amorti par des ressorts.

13. Dispositif selon la revendication 10, **caractérisé en ce que** l'alignement du corps (4) sur le champ de gravité (3) est amorti par des moyens électromagnétiques.

14. Dispositif selon la revendication 10, **caractérisé en ce que** l'alignement du corps (4) sur le champ de gravité (3) est amorti mécaniquement par frottement.

15. Dispositif selon la revendication 10, **caractérisé en ce que** l'alignement du corps (4) sur le champ de gravité (3) est amorti par des amortisseurs de chocs pneumatiques ou à gaz sous pression.

16. Dispositif selon la revendication 2, **caractérisé en ce que** les moyens (5) sont des sources d'éclairage optique.

17. Dispositif selon la revendication 2, **caractérisé en ce que** les moyens (5) sont des diodes luminescentes (LED).

18. Dispositif selon la revendication 2, **caractérisé en ce que** les moyens (5) sont des diodes luminescentes dans l'infrarouge.

19. Dispositif selon la revendication 1, **caractérisé en ce que** les moyens (5) sont des réflecteurs optiques.

20. Dispositif selon la revendication 2, **caractérisé en ce que** les moyens (5) sont des émetteurs acoustiques.

21. Dispositif selon la revendication 3, **caractérisé en ce que** les moyens (5) de détection des ondes acoustiques sont des microphones.

22. Dispositif selon la revendication 2, **caractérisé en ce qu'**il est en supplément équipé d'au moins deux capteurs optiques (13) et d'une unité d'évaluation (16), et **en ce que** les ondes électromagnétiques émises par ces deux moyens (5) au moins prévus sont détectées par ces capteurs optiques (13) et que la position des coordonnées dans l'espace du système de coordonnées (1) peut être déterminée ainsi par évaluation d'effets d'interférence.

23. Dispositif selon la revendication 2, **caractérisé en ce qu'**il est en supplément équipé d'au moins deux caméras (10) fixes dans l'espace et d'une unité d'évaluation (16), **en ce que** les ondes électromagnétiques émises par ces deux moyens (5) au moins prévus sont détectées par ces caméras (10) et **en ce que** la position des coordonnées spatiales du système de coordonnées (1) peut ainsi être déterminée par vidéogrammétrie.

24. Dispositif selon la revendication 2, **caractérisé en ce qu'**il est équipé en supplément d'au moins deux caméras (10) et d'une unité d'évaluation (16) et **en ce que** les caméras supplémentaires (10) pour l'enregistrement des ondes électromagnétiques émises par les deux moyens (5) au moins prévus ne sont pas disposées en position fixe, et **en ce que** la position des caméras (10) est déterminée par enregistrement et évaluation d'un champ (11) de points d'adaptation fixe dans l'espace.

25. Dispositif selon la revendication 2, **caractérisé en ce qu'**il est équipé en supplément d'au moins deux caméras (10) fixes dans l'espace et d'une unité d'évaluation (16), et **en ce que** les caméras supplémentaires (10) sont des caméras numériques.

26. Dispositif selon la revendication 2, **caractérisé en ce qu'**il est équipé en supplément d'au moins deux capteurs acoustiques et d'une unité d'évaluation (16), **en ce que** les ondes acoustiques émises par ces deux moyens (5) au moins prévus sont détectées par ces capteurs acoustiques et qu'ainsi la position des coordonnées spatiales du système de coordonnées (1) peut être déterminée par évaluation d'effets d'interférence.

27. Dispositif selon la revendication 2, **caractérisé en ce qu'**il est équipé en supplément d'au moins deux capteurs optiques (13) appartenant à un système de chirurgie assistée par ordinateur (CAS) et **en ce que** la position des coordonnées spatiales du système de coordonnées (1) est déterminée par enregistrement des ondes électromagnétiques émises par les deux moyens (5) au moins prévus, à l'aide des capteurs (13) et de l'unité d'évaluation (16) appartenant au système de chirurgie assistée par ordinateur.

28. Dispositif selon la revendication 19, **caractérisé en ce qu'**il est équipé en supplément d'au moins deux caméras (10), d'au moins un émetteur émettant des ondes électromagnétiques et d'une unité d'évaluation (16), et **en ce que** les ondes électromagnétiques réfléchies par les deux moyens (5) au moins prévus sont détectées par ces caméras (10), ce qui permet de déterminer ainsi la position des coordonnées spatiales du système de coordonnées (1).

29. Dispositif selon la revendication 3, **caractérisé en ce qu'**il est équipé en supplément d'au moins deux émetteurs émettant des ondes acoustiques et d'une unité d'évaluation (16), et **en ce que** les ondes acoustiques émises par les deux émetteurs au moins prévus sont détectées par les microphones qui sont installés sur le dispositif selon l'invention, la position des coordonnées spatiales du système de coordonnées (1) pouvant ainsi être déterminée à partir de l'évaluation d'effets d'interférence.

30. Dispositif selon la revendication 3, **caractérisé en ce qu'**il est équipé en supplément d'au moins deux émetteurs acoustiques appartenant à un système de chirurgie assistée par ordinateur (CAS) et **en ce que** la position des coordonnées spatiales du système de coordonnées (1) est déterminée à l'aide des microphones installés sur le corps (4) et de l'unité d'évaluation (16) appartenant au système de chirurgie assistée par ordinateur, en enregistrant par les microphones les ondes émises par les deux émetteurs au moins prévus.

31. Dispositif selon la revendication 1, **caractérisé en ce que** les moyens (5) détectant le champ magnétique sont des bobinages.

32. Dispositif selon la revendication 1, **caractérisé en ce que** les moyens détectant le champ magnétique (5) sont des capteurs Hall.

33. Dispositif selon la revendication 31, **caractérisé en ce qu'**il est équipé en supplément d'au moins un bobinage établissant un champ magnétique et d'une unité d'évaluation (16), et **en ce que** le champ magnétique établi est détecté par les bobinages prévus sur le dispositif selon l'invention, la position des coordonnées spatiales du système des coordonnées (1) pouvant être ainsi déterminée par l'évaluation de l'induction magnétique.

34. Dispositif selon la revendication 32, **caractérisé en ce qu'**il est équipé en supplément d'au moins un bobinage établissant un champ magnétique et d'une unité d'évaluation (16) et **en ce que** le champ magnétique établi est détecté par les capteurs Hall prévus sur le dispositif selon l'invention, la position des coordonnées spatiales du système de coordonnées (1) pouvant être ainsi déterminée par l'évaluation de l'effet Hall.

35. Dispositif selon la revendication 31, **caractérisé en ce qu'**il est en supplément équipé d'au moins un bobinage établi sur un champ magnétique et appartenant à un système de chirurgie assistée par ordinateur (CAS), la position des coordonnées spatiales du système de coordonnées étant déterminée à l'aide des bobinages prévus sur le dispositif selon l'invention et de l'unité d'évaluation (16) appartenant au système de chirurgie assistée par ordinateur, par l'enregistrement du champ magnétique par les 2 bobinages au moins prévus.

36. Dispositif selon la revendication 32, **caractérisé en ce qu'**il est en supplément équipé d'au moins un bobinage établissant un champ magnétique et appartenant à un système de chirurgie assistée par ordinateur (CAS), la position des coordonnées spatiales du système de coordonnées (1) étant déterminée à l'aide des capteurs Hall prévus sur le dispositif selon l'invention et de l'unité d'évaluation (16) appartenant à un système de chirurgie assistée par ordinateur, par l'enregistrement du champ magnétique par les 2 capteurs Hall au moins prévus.
